# EUROPÄISCHE PATENTSCHRIFT

(11) **EP 1 352 553 B1**
(45) Veröffentlichungstag und Bekanntmachung des Hinweises auf die Patenterteilung: **13.02.2008**
(21) Anmeldenummer: 03003498.7
(22) Anmeldetag: 14.02.2003
(51) Int. Cl.: A01D 78/12

(54) **Kreiselschwader**
Rotary swather
Andaineuse rotative

(30) Priorität: 12.04.2002 DE 10216474
(43) Veröffentlichungstag der Anmeldung: 15.10.2003
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- EP-A- 0 124 837
- EP-A- 0 559 023
- AT-B- 366 875
- DE-A- 2 300 969
- DE-B- 1 907 337
- FR-A- 1 562 572
- FR-A- 2 307 458
- FR-A- 2 310 080
- US-A- 4 062 174
- US-A- 4 281 506

## Beschreibung

Die Erfindung betrifft einen Kreiselschwader nach dem Oberbegriff des Anspruchs 1.

Das ständig wachsende Leistungsangebot von Traktoren verlangt einerseits nach größeren Arbeitsbreiten von landwirtschaftlichen Arbeitsmaschinen und andererseits nach größeren Fahrgeschwindigkeiten. Das Ziel ist es, die Flächenleistung der landwirtschaftlichen Arbeitsmaschinen zu erhöhen um eben damit das Leistungsangebot von Traktoren optimal nutzen zu können.

Dabei sind geräteseitig nicht notwendigerweise die Vorraussetzungen vorhanden, Arbeitsmaschinen mit derartig hohen Antriebsleistungen auch voll nutzen zu können. Die Frage nach der Robustheit derartiger Arbeitsmaschinen hinsichtlich der Verkraftbarkeit kurzfristiger Überlastungen, wie z.B. durch übermäßige Drehmomentspitzen, aktions- oder reaktionsbedingt, oder auch durch hohe momentane äußere Krafteinwirkungen durch unbeabsichtigte Betriebszustände, beispielsweise durch unangepasste zu hohe Fahrgeschwindigkeiten, sind gerade im Hochleistungsbereich von großer Bedeutung, was die Lebensdauer derartige Maschinen betrifft.

Kreiselschwader fallen unter diese Kategorie von landwirtschaftlichen Arbeitsmaschinen siehe z.B. US-A-4281506.

Unterschiedliche Voraussetzungen verlangen Kreiselschwader für eben jene unterschiedliche Einsatzbedingungen. Dieses schlägt sich nieder durch unterschiedliche Arbeitsbreiten von Kreiselschwadern mit unterschiedlichen Durchmessern der Schwadkreiseln und/oder durch unterschiedliche Anzahl und deren geometrischer Zuordnung von Schwadkreiseln, wie nebeneinander, versetzt zueinander und/oder hintereinander angeordneter Schwadkreisel.

Kreiselschwader. dieser Gattung werden unter erheblich variierenden

Arbeitsbedingungen eingesetzt, sowohl für Normal- als auch für Hochleistungsbedingungen in ebenem Gelände oder hügeligem Gelände zur Bearbeitung unterschiedlichstem Erntegut, insbesondere für stängeliges Halmgut.

Hinzu kommen auch nicht beabsichtigte Betriebssituationen, wie beispielsweise die, das die Zinkenarme von Schwadkreiseln Hindernisse berühren, beispielsweise Zaunpfähle, Baumstämme oder Strommasten oder dergleichen.

Auch kommt es vor, dass während des Transportes, Breiten oder Höhe von Durchfahrten falsch eingeschätzt werden, wodurch es zu Kollisionen zwischen den Zinkenarmen der Schwadkreisel und den sich in den wegstellenden Hindernissen kommen kann.

Derartige Kollisionen können zu erhebliche Schäden vornehmlich an den Schwadkreiseln selbst führen, die es zu verhindern gilt.

Des weiteren ist die momentane Leistungsaufnahme an der Antriebswelle eines Schwadkreisels von Kreiselschwadern abhängig u.a. vom Durchmesser und somit von der Arbeitsbreite eines Schwadkreisels aber auch abhängig von der momentan zu bewegenden Futtermasse und damit von der momentanen Fahrgeschwindigkeit.

Aus den vorgenannten Gründen werden Schwadkreisel mit verschiedenen Durchmessern, verschiedenen Kreiselgetrieben und verschiedenen Kurvenbahnsteuerungen mit normalen oder verstärkten Zinkenarmen mit normalen oder verstärkten Lagern und unterschiedlichen Gehäusen in offener oder geschlossener Bauart gebaut.

Dieses erzeugt im Umfeld der Herstellung von Kreiselschwadern eine entsprechende Teilevielfalt welches einen erheblichen logistischen Aufwand erforderlich macht und welches sich in entsprechenden Stückkosten niederschlägt.

Die Erfindung stellt sich daher die Aufgabe, durch die Art der konstruktiven Ausgestaltung eine modulare Plattform für Schwadkreisel von Kreiselschwadern zu schaffen, die es ermöglicht die Teilevielfalt zu senken und dabei dennoch den unterschiedlichen Leistungsanforderungen an Typenreihen von Kreiselschwader gerecht zu werden, um damit einerseits die wirtschaftlichere Fertigung von Kreiselschwadern zu verbessern und um damit andererseits den unterschiedlichsten Einsatzbedingungen und damit einhergehend den unterschiedlichen Anforderungsprofilen des praktischen Einsatzes besser gerecht werden zu können.

Die erfinderische Aufgabenstellung wird gelöst mit den kennzeichnenden Merkmalen des Anspruches 1. Weitere vorteilhafte Ausgestaltungen der Erfindung sind der Beschreibung, den Unteransprüchen und den Figurendarstellungen zu entnehmen.

Dementsprechend zeichnet sich ein gattungsgemäßer Kreiselschwader nach der Erfindung mit Schwadkreiseln, dessen Rechzinken in bekannter Weise von einer Kurvenbahnsteuerung gesteuert werden, dadurch aus, dass das Basiselemente zur Erzeugung der Bewegungsvorgänge der Rechzinken auf deren Umlaufbahn in einem diesen Elementen gemeinsamen ersten inneren Gehäuse als Basiseinheit untergebracht sind und das erste innere Gehäuse von einem zweiten äußeren Gehäuse umgeben ist, welches sich auf dem ersten inneren Gehäuse abstützt, wobei sowohl das erste innere und das zweite äußere Gehäuse als Teil des Rechkreisels an dessen Umlaufbewegung teilnehmen.

Dabei ist von ausschlaggebender Bedeutung, dass diese Basiseinheit als Teil einer modularen Plattform eine bereits völlig autarke d.h. in sich abgeschlossenen Einheit darstellt, so das diese für sich allein genommen bereits einen Rechkreisel lagern und steuern kann.

In einer weiteren Ausgestaltung der Erfindung kann diese Basiseinheit von einem zweiten äußeren Gehäuse als ein um die Kreiselachse durch Kopplung mit der Basiseinheit synchron mitrotierendes Gestell überbaut werden, wodurch zusätzliche Stützlager für die Zinkenarme der Rechzinken an diesem Gestell abgestützt werden können.

Dadurch wird eine räumliche Ausdehnung zwischen der Basiseinheit und dem äußeren Gehäuse geschaffen, die es nunmehr ermöglicht, zwischen den Lagern der Basiseinheit und den Lagern des äußeren Gehäuses Kupplungselemente zum Antrieb der Zinkenarme unterzubringen. Die so herbeigeführte zusätzliche Abstützung eines Zinkenarms beidseitig dieses Kupplungselements trägt zu einer erheblich größeren Belastbarkeit eines Zinkenkreisels insgesamt bei, so das mit dieser Basiseinheit zum Antrieb und zur Steuerung des Zinkenkreisels ein wesentlich größeres Leistungsspektrum eines Rechkreisels abgedeckt werden kann, als dieses ohne diese zusätzliche Abstützung möglich gewesen wäre.

Dabei kann das zweite äußere Gehäuse so ausgebildet sein, dass es jederzeit lösbar mit dem inneren Gehäuse verbunden ist und das es dabei durch einen geeigneten Verstellmechanismus relativ zur Basiseinheit verdrehbar ist. Dieses schafft weitere Möglichkeiten einer erfinderischen Ausgestaltung von Schwadkreiseln nach der Erfindung.

Die relative Verdrehbarkeit des äußeren Gehäuses gegenüber der Basiseinheit schafft zusätzliche Möglichkeiten, durch veränderbare Einflussgrößen auf das Ergebnis des Arbeitsprozesses eines Kreiselschwaders Einfluss zu nehmen, welches die Qualität des erzeugte Ernteguts verbessern kann.

Und nicht zuletzt kann durch den Mechanismus der relativen Verdrehbarkeit eine Anfahrsicherung zur Vermeidung von Überlast an den Antriebselementen eines Schwadkreisels geschaffen werden.

Diese Basiseinheit in Verbindung mit der konstruktiven Ausgestaltung eines mitrotierendes Gestells als äußeres Gehäuse zur Abstützung einer zusätzlichen Lagerung von Zinkenarmen kann somit eine modulare Plattform für eine größere Bandbreite von Typenreihen von Kreiselschwadern darstellen.

Das Ausprägungsmerkmal einer räumlich kompaktbauenden Basiseinheit ist insbesondere auch dann von erheblichem Vorteil, wenn die Kurvenbahnsteuerung in einem geschlossenen und abgedichtetem Gehäuse in einem Ölbad oder Fliessfettgetriebe betrieben werden soll.

Dieses deshalb, weil die Bearbeitung derartiger Gehäuse wegen seines geringen Bauraums und somit wegen seines geringen Gewichts auf allgemein üblichen und standardisierten Bearbeitungszentren erfolgen kann, welches mit erheblichen Kosteneinsparungen verbunden ist. Dazu zählen auch die Kosten der Materialersparnis

Auch die konstruktive Ausgestaltung der Abdichtungen der Lagerstellen der Zinkenarme ist insofern einfacher und kostengünstiger, da die Lager aufgrund der geringeren Belastung in ihrer Tragfähigkeit herabgesetzt werden können.

Diese vorteilhafte Ausgestaltung der Erfindung schafft weitere Möglichkeiten der Realisierung erfinderischer Vorteile.

Durch die Schaffung eines zusätzlichen Bauraumes zwischen dem inneren und äußeren Gehäuse ist es möglich, den sich in radialer Richtung erstreckenden Zinkenarm innerhalb dieses Bauraums durch eine Ausgleichskupplung zu unterbrechen bzw. dadurch zu verbinden. Dieses kompensiert eventuell vorhandene Fluchtungsfehler zwischen den Lagern des inneren und äußeren Gehäuses, wodurch an die Präzision der Fertigung des äußeren Gehäuses weit weniger hohe Anforderungen gestellt werden müssen, als dieses beispielsweise bei der monolithischen Ausgestaltung eines größeren inneren Gehäuses der Fall sein müsste. Dieses ermöglicht es, ein derartiges äußeres Gehäuse z.B. als Formpressteil aus Blechtafeln unter einer Presse zu prägen, wobei dann jegliche mechanische und zerspanende Nachbearbeitung entfallen kann. Dadurch kann in besonders vorteilhafter Weise ein besonders hohen Stoßbelastungen standhaltender Schwadkreisel erzeugt werden, indem beispielsweise ein derartiges äußeres Gehäuse zweiteilig - aus einer geprägten oberen und unteren Gehäuseglocke - ausgestaltet ist, wobei an dessen äußerem Umfang die äußeren Stützlager zwischen der oberen und unteren Gehäuseglocke eingespannt sind.

In einer weiteren Ausgestaltung der Erfindung ist es möglich, das innere und das äußere Gehäuse eines Schwadkreisels relativ um dessen Kreiselachse zueinander zu verdrehen um beide, das innere und das äußere Gehäuse nach dieser Verdrehung zueinander wieder in eine festgesetzte Position zueinander zu arretieren. Der Freiheitsgrad einer derartigen relativen Verdrehung schafft weitere Anwendungsmöglichkeiten und dadurch besonders vorteilhafte Wirkungen der Erfindung.

So kann dadurch beispielsweise eine Überlastsicherung als Anfahrsicherung für die Zinkenkreisel realisiert werden, indem die Arretierung als Abscherelement oder als Sperrkörperkupplung ausgelegt ist.

Dieses schützt einerseits die Zinkenarme gegen Verbiegung und bleibender Verformung und andererseits das innere Gehäuse und dessen Kurvenbahnsteuerung einschließlich das vorgelagerte Kegelradgetriebe gegen Verformungen und Brüche. Gerade derartige Reparaturen sind mit erheblichen Zeit- und Kostenaufwand verbunden, welches gleichzeitig zu längeren Ausfallzeiten eines derart beschädigten Kreiselschwaders führt.

Die Nutzung dieses zusätzlichen Freiheitsgrades der relativen Verdrehung ist aber keineswegs auf die Realisierung einer Anfahr- und Überlastsicherung beschränkt. Eine weitere vorteilhafte Ausgestaltung der Erfindung sieht vor, die Ausgleichskupplung in der Längserstreckung eines Zinkenarms durch ein Kardangelenk zu ersetzen. Dadurch ist es nunmehr mögliche durch relative Verdrehung des inneren gegenüber dem äußeren Gehäuse, einen Verstellmechanismus zu realisieren, um den tangentialen Eingriffswinkel der Zinkenarme und dadurch gleichermaßen den tangentiale Eingriffswinkel der Rechzinken zu verändern.

Dieses beinhaltet den Vorteil, das dadurch die Rechzinken auf die aufzunehmende und zu rechende Futtermasse optimal eingestellt werden können, wodurch das Ablegeverhalten des Schwadkreisels zur Bildung eines Schwads optimiert werden kann. Gerade dieses ist in Bezug auf die Fahrgeschwindigkeit in Bezug auf die zu bearbeitende Futtermasse von besonderer Bedeutung für die Bildung eines sauberen Schwads oder anders formuliert trägt dieses zur Verbesserung der Arbeitsqualität bei höheren Flächenleistungen von Kreiselschwadern bei.

Die nachfolgenden Ausführungsbeispiele verdeutlichen dieses und die wesentlichen Merkmale der Erfindung.

### Bezugszeichenliste

- 1,1',1": Schwadkreisel
- 2,2': Zinkenarm
- 3: Rechzinken
- 4: Kreiselachse
- 5: Tast- u. Stützrad
- 6: Schwinge
- 7: Drehpunkt
- 8: Gehäuse
- 9: Kurvenbahnsteuerung
- 10: Kurvenbahn
- 11: Laufrolle
- 12: Steuerhebel
- 13: Kegelradgetriebe
- 14: Getriebegehäuse
- 15: Kegelradritzel
- 16: Tellerrad
- 17: Fixpunkt
- 18: Gehäuse
- 19: Ausgleichskupplung
- 19': Kreuzgelenk
- 20: Lagerhals
- 21,21': Lager
- 22: Lager
- 23,23': Lager
- 24: Hohlwelle
- 25: Lager
- 26,26': Zentrieransatz
- 27: obere Gehäuseglocke
- 28: untere Gehäuseglocke
- 29: Rotationsebene
- 30,30': äußeres Stützlager
- 31: Schnappriegelbolzen
- 32: Rechposition
- 33: ausgehobene Position
- 34,34': Umlaufrichtung
- 35: Befestigungsflansch
- 36: Schraubverbindung
- 37: Lagerbund
- 38,38': Umfangspunkt
- 39: Abstand der Gelenke 8,8' in der Arbeitstellung
- 40: Radius
- 41: Steckkupplung
- 42: Sicherungsstift
- 43: Federbolzen
- 44: Führungsgehäuse
- 45: Druckfeder
- 46: Unterlegscheibe
- 47: Spannstift
- 48: Kugelpfanne
- 49: Stahlkugel
- 50: Radius
- 51: Ursprungsabstand
- 52: Abstand
- 53: Mittelpunkt
- 54,54': Positionsbohrung
- 55: Radiusstrahl
- 56: Fahrwerk
- 57: Zwischenraum
- 58: obere Anlagefläche
- 59: untere Anlagefläche
- 60: Arbeitsebene
- 61: schiefe Ebene
- 62: Schwenkachse
- 63: Gehäusebohrung
- 64: Lochbildmuster
- 65: Feststelleinrichtung

- D1,D2,D2',D3: Kreiseldurchmesser
- F: Fahrtrichtung
- M1: Antriebsdrehmoment
- M2: Antriebsdrehmoment

- α,α',α",α"': Anstellwinkel
- β,β',β",β'": Beugewinkel
- δ,δ',δ": Verdrehwinkel

Es zeigen:
- Fig. 1: zeigt einen gattungsgemäßen Schwadkreisel in einer Schnittdarstellung
- Fig. 1a: zeigt einen vergrößerten Ausschnitt aus Fig.1
- Fig. 2: zeigt einen gattungsgemäßen Schwadkreisel in einem Horizontalschnitt gemäß Schnitt A-A in Fig. 1

- Fig. 3: zeigt einen erfindungsgemäßen Schwadkreisel in einer Schnittdarstellung
- Fig. 3a: zeigt einen vergrößerten Ausschnitt aus Fig.3
- Fig. 3b: zeigt eine Variantenkonstruktion zu Fig.3a
- Fig. 3c: zeigt eine Variantenkonstruktion zu Fig.3b
- Fig. 4: zeigt einen erfindungsgemäßen Schwadkreisel in einem Horizontalschnitt gemäß Schnitt B-B in Fig. 3

- Fig. 5: zeigt einen erfindungsgemäßen Schwadkreisel in einer Schnittdarstellung
- Fig. 5a: zeigt einen vergrößerten Ausschnitt aus Fig.5
- Fig. 5b: zeigt eine Variantenkonstruktion zu Fig.5a
- Fig. 6: zeigt einen erfindungsgemäßen Schwadkreisel in einem Horizontalschnitt gemäß Schnitt C-C der Fig. 5

- Fig. 7: zeigt einen erfindungsgemäßen Schwadkreisel in einer Schnittdarstellung
- Fig. 7a: zeigt einen vergrößerten Ausschnitt aus Fig.3
- Fig. 7b: ein Verriegelungsmechanismus im gesperrten Zustand
- Fig. 7c: ein Verriegelungsmechanismus im freigeschalteten Zustand

- Fig. 8: zeigt einen erfindungsgemäßen Schwadkreisel in einer Draufsicht
- Fig. 8a: zeigt einen vergrößerten Ausschnitt aus Fig.8
- Fig. 8b: zeigt einen vergrößerten Ausschnitt aus Fig.8a

- Fig. 9: zeigt einen erfindungsgemäßen Schwadkreisel in einer Draufsicht
- Fig. 9a: zeigt ein Ausführungsbeispiel eines Kugel-Schnappriegelverschlusses in verriegelter Grundstellung
- Fig. 9b: zeigt ein Ausführungsbeispiel eines Kugel-Schnappriegelverschlusses in ausgerasteter Stellung nach Überlast

- Fig. 10: zeigt einen erfindungsgemäßen Schwadkreisel in einer Draufsicht in einer raumsparenden Transportstellung mit tangential angelegten Zinkenarmen

- Fig. 11: zeigt einen erfindungsgemäßen Schwadkreisel in einer Draufsicht mit negativem tangentiale Anstellwinkel der Zinkenarme

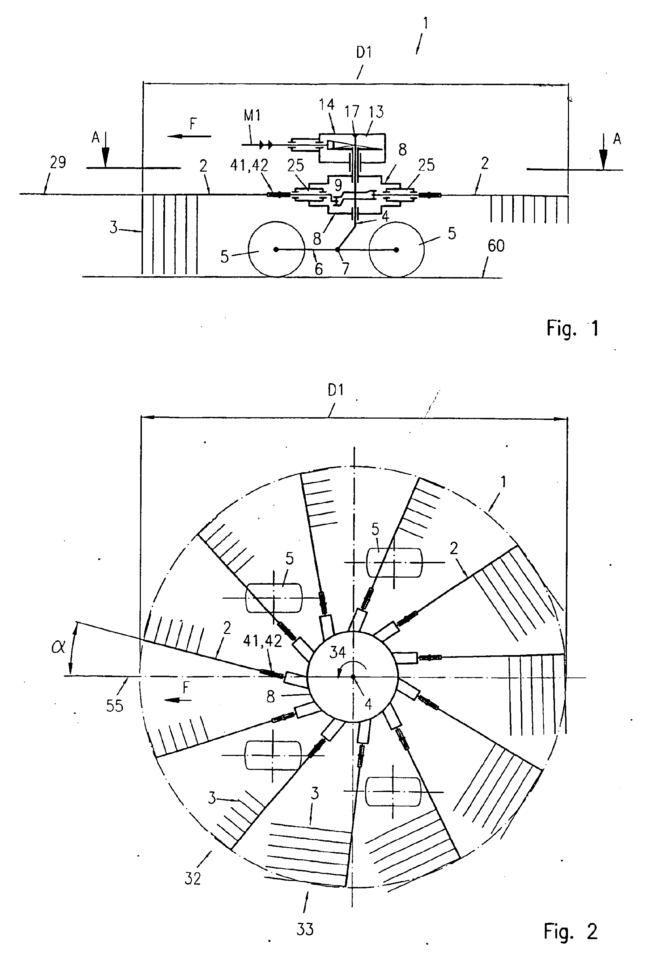

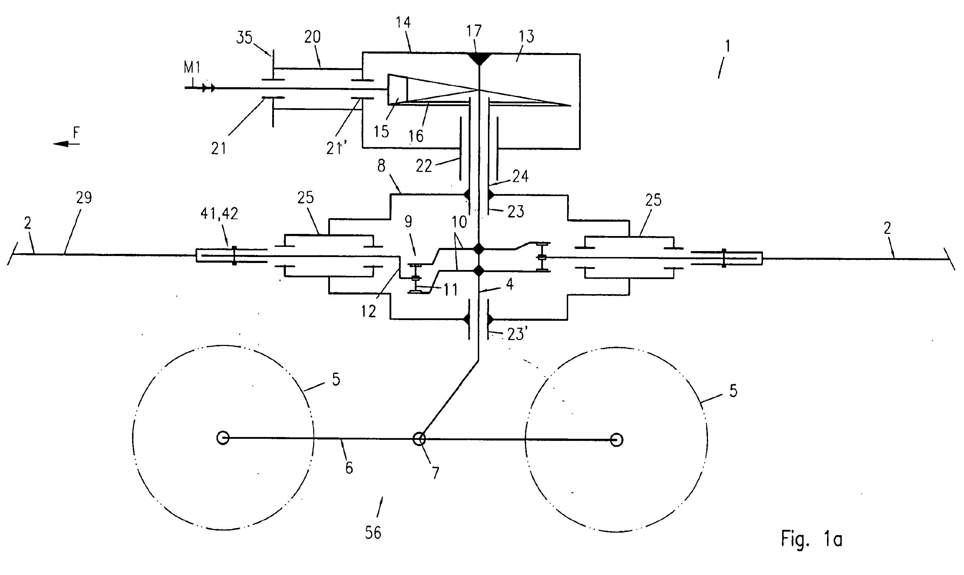

In Fig. 1 ist ein gattungsgemäßen Schwadkreisel 1 mit dem Durchmesser D1 und den Zinkenarmen 2 in einer vereinfachten Schnittdarstellung als Drahtmodell, und in Fig. 2 ist der Schwadkreisel 1 gemäß Fig. 1 in einem Horizontalschnitt A-A mit Blickrichtung auf die Arbeitsebene 60 dargestellt. Fig. 1a zeigt dabei einen vergrößerten Ausschnitt des Schwadkreisels gemäß Fig.1 im Schnitt.

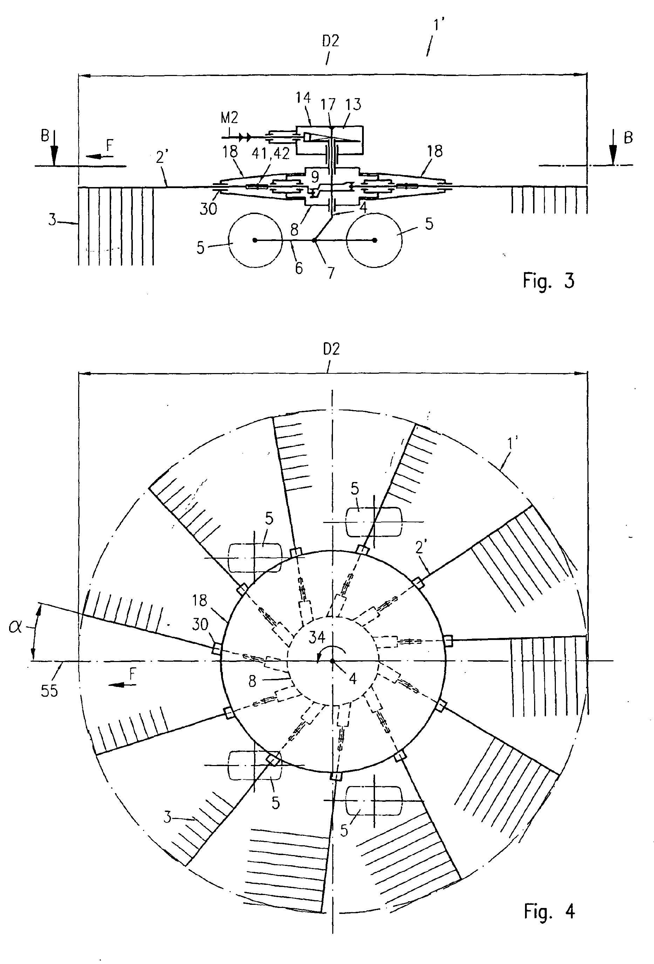

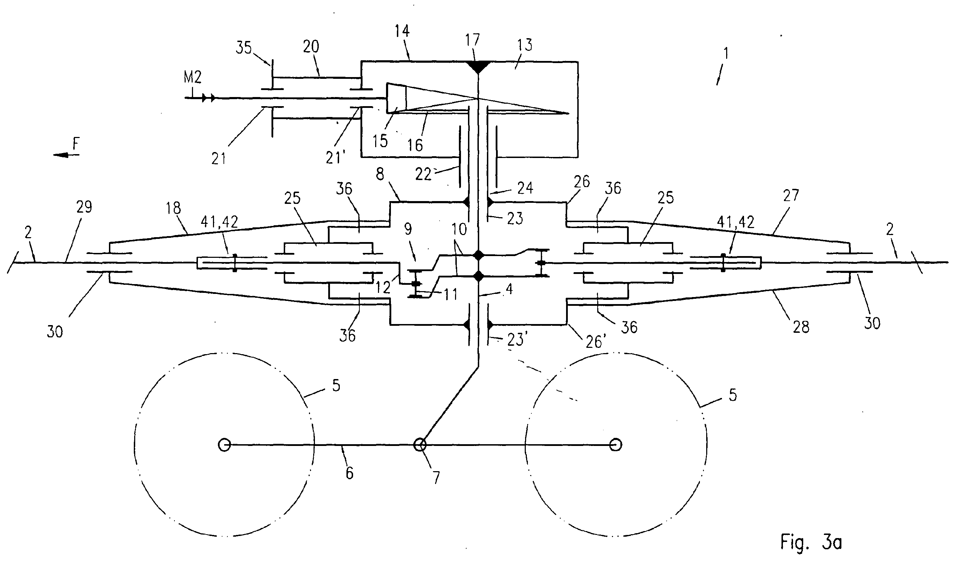

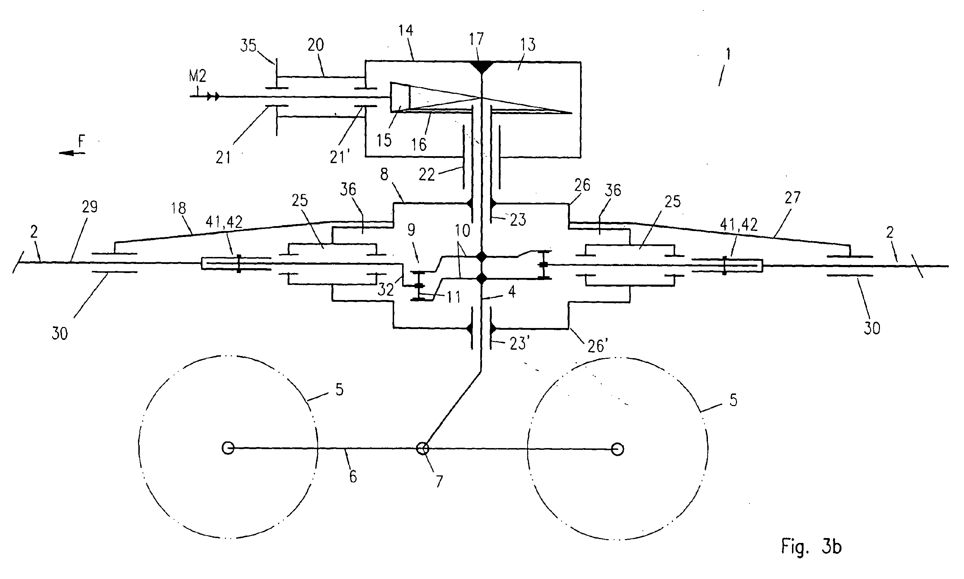

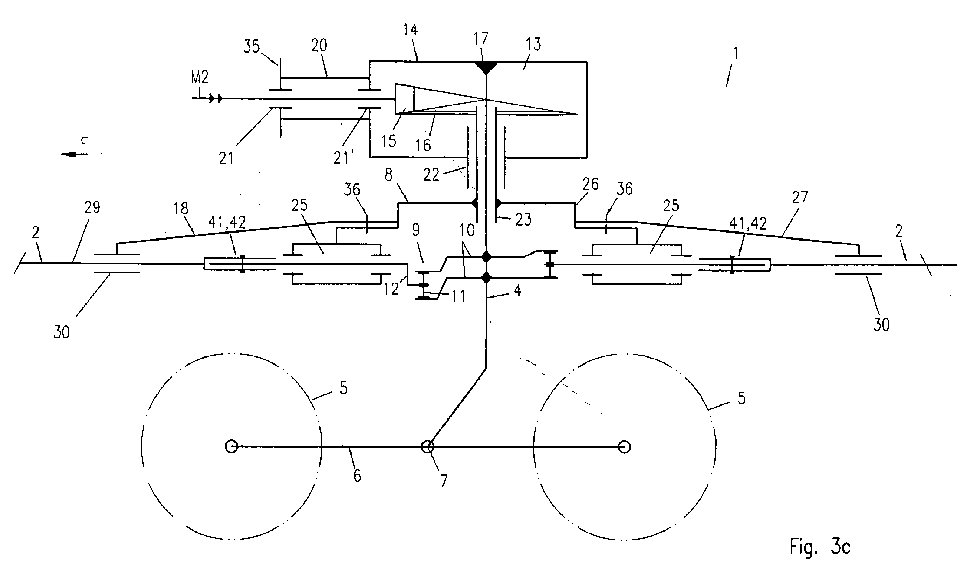

Fig. 3, Fig. 3a und Fig. 4 zeigen einen größeren Schwadkreisel 1' mit dem Durchmesser D2 analog der Figurendarstellungen Fig.1, Fig.1a und Fig. 2, jedoch mit längeren Zinkenarmen 2', die durch ein zusätzliches äußeres Gehäuse 18 und zusätzliche äußere Stützlager 30 nach der Erfindung geführt werden. Dabei ist in der Fig. 4 der Schwadkreisel 1' in einem Horizontalschnitt B-B gemäß Fig.3 mit Blickrichtung auf die Arbeitsebene 60 dargestellt. Die Figuren Fig.3b und 3c zeigen Varianten eines erfindungsgemäßen Schwadkreisels 1'gemäß den Fig. 3, 3a und 4 in einer vereinfachten Ausführung.

Ein Schwadkreisel 1 bestehen in bekannter Weise im Wesentlichen aus den Zinkenarmen 2 mit den daran befestigten Rechzinken 3, wobei die Zinkenarme 2 in einem inneren Gehäuse 8 in Lagern 25 schwenkbar gelagert sind. Die Zinkenarme 2 erstrecken sich dabei überwiegend in radialer Richtung lotrecht zur Kreiselachse 4 jedoch unter einem tangentialen Anstellwinkel α nach außen. Alle Zinkenarmen 2 liegen dabei in der selben Rotationsebene 29. Die Zinkenarme sind in bekannter Weise mittels einer Steckkupplung 41 mit Sicherungsstecken 42 gesichert mit den Steuerhebeln 12 der Kurvenbahnsteuerung 9 verbunden.

Dargestellt ist der Schwadkreisels 2 in einer momentanen Drehwinkelposition die gekennzeichnet ist durch den tangentialen Anstellwinkel α eines Zinkenarms 2 gegenüber einem Radiusstrahl 55, der parallel zur Fahrtrichtung F ausgerichtet ist. Diese Drehwinkelposition gilt als Ausgangsposition aller weiteren nachfolgend dargestellten Schwadkreisel, anhand derer die erfinderischen Vorteile der Erfindung dargestellt und beschrieben werden.

Dabei werden die Rechzinken 3 auf ihrer Umlaufbahn um die Kreiselachse 4 von mit Laufrollen 11 besetzten Steuerhebeln 12, die von einer Kurvenbahnsteuerung 9 durch eine Kurvenbahn 10 in ihrer momentanen Ausrichtung entweder in ihrer Rechposition 32 oder in ihrer ausgehobenen das Rechgut freigebenden Position 33 gehalten. Dabei werden die Rechzinken 3 während ihrer Umlaufbewegung um die Kreiselachse 4 in durch die Stellung der Kurvenbahn vorgegebenen Drehwinkelpositionen periodisch umgesteuert entweder in die Rechposition 32 oder in die ausgehobene Position 33.

Der Schwadkreisel 1 ist gegenüber dem Boden auf seiner Arbeitsebene 60 durch ein Fahrwerk 56 abgestützt. Dieses besteht im wesentlichen aus den Tast- und Stützrädern 5, die mittels Schwingen 6 untereinander verbunden sind und die in einem Drehpunkt 7 mit der feststehenden Kreiselachse 4 verbunden sind.

Die gegenüber dem aus Vereinfachungsgründen nicht dargestellten Maschinenrahmen feststehende Kreiselachse 4 ist mit dem Getriebegehäuse 14 eines Kegelradgetriebes 13 im Fixpunkt 17 verbunden. Angetrieben wird der Schwadkreisel 1 in bekannter Weise beispielsweise von der Zapfwelle eines Traktors oder von einem Hydraulikmotor mit dem Drehmoment M1, welches eine Kegelradritzel 15 antreibt, wobei das Kegelradritzel 15 in den Lagern 21, 21' des Lagerhalses 20 des Getriebegehäuses 14 gelagert ist. Der Lagerhals 20 trägt an seinem freien Ende einen Befestigungsflansch 35, an dem der komplette Schwadkreisel mit dem Maschinenrahmen eines Kreiselschwaders in bekannter Weise verbindbar ist. Das Kegelradritzel 15 steht in antriebsseitigem Eingriff mit einem Tellerrad 16, welches mit dem inneren Gehäuse 4 und somit mit den Zinkenarmen und deren Rechzinken 3 in drehfester Verbindung steht.

Die drehfester Verbindung zwischen dem Tellerrade 16 und dem inneren Gehäuse 8 wird durch die Hohlwelle 24 hergestellt, wobei das inneren Gehäuse 8 sich in den Lagern 23,23' auf der fesstehenden Kreiselachse 4 abstützt. Dabei stützt sich die Hohlwelle 24 einerseits in dem Lager 23 andererseits in dem Lager 22 des Getriebegehäuses 14 ab.

Somit werden die Zinkenarme 2 um die Kreiselachse 4 in der Rotationsebene 19 in ihrer Umlaufrichtung 34 angetrieben. Bedingt durch die Fahrbewegung des Traktors in Fahrtrichtung F und durch dessen direkten Antrieb durch die Zapfwelle oder durch einen indirekten Antrieb beispielsweise durch die Bordhydraulik, bewegen sich die Rechzinken eines Schwadkreisels 1 einerseits in Fahrtrichtung F andererseits in Umlaufrichtung 34. Beide Bewegungsarten, die der Rotation und die der Translation gemeinsam ermöglichen eine mobile d.h. flächendeckende Recharbeit.

Kreiselschwader dieser Gattung können sowohl als Einkreisel- wie auch als Mehrkreiselschwader ausgebildet sein.

In Figur 3 und Figur 4 ist analog zur Fig.1 bzw. analog zur Fig.2 ein größerer Rechkreisel 1' mit dem größeren Durchmesser D2 dargestellt. Dabei ist unterstellt, dass die Baueinheiten Kegelradgetriebe 13, inneres Gehäuse 8 einschließlich der Kurvenbahnsteuerung 9 untereinander in beiden Rechkreiseln 1 bzw. 1' exakt identisch sind. Rechkreisel 1 mit dem Durchmesser D1 unterscheidet sich insofern nur von dem Rechkreisel 2 mit dem Durchmesser D2 in der Länge der Zinkenarme 2', wobei bedingt durch den größeren Durchmesser D2 die Zinkenarme mit einer größeren Anzahl Rechzinken2 bestückt sein können.

Da nunmehr aber wegen des größeren Durchmessers D2, der die Arbeitsbreite des einzelnen Rechkreisels bestimmt, ein größeres Drehmoment M2 an der Ritzelwelle anliegt und dadurch bedingt auch zu erwarten ist, dass die Lagerreaktionen. in den Lagern 25 der Zinkenarme 2 entsprechend anwachsen, sind die Zinkenarme 2' in zusätzlichen äußeren Stützlagern 30 abgestützt.

Diese zusätzlichen äußeren Stützlager 30 sind Teil eines weiteren äußeren Gehäuses 18. Dieses äußere Gehäuse 18 kann beispielsweise gebildet werden aus einer oberen Gehäuseglocke 27 und einer unteren Gehäuseglocke 28. Beide, die obere Gehäuseglocke 27 und die untere Gehäuseglocke 28, können mittels einer Schraubverbindung 36 mit dem inneren Gehäuse 8 verschraubt sein und sich daher an diesem abstützen. Um die koaxiale Ausrichtung der oberen Gehäuseglocke 27 bzw. der unteren Gehäuseglocke 28 gegenüber der Kreiselachse 4 zu gewährleisten, ist das innere Gehäuse 8 mit einem oberen Zentrieransatz 26 und einem unteren Zentrieransatz 26' ausgestatten. Somit sind die obere Glocke 27 und die untere Glocke 28 mittels einer Flanschverbindung, bestehend aus dem Zentrieransatz 26, 26' und der Schraubenverbindung 36 mittels einer Flanschverbindung mit dem inneren Gehäuse 8 drehfest untereinander verbunden.

Dabei sind die äußeren Lager 30 somit am äußeren Umfang des äußeren Gehäuses 18 positioniert und sie können mittels einer aus Vereinfachungsgründen nicht näher dargestellten Schraubverbindung mit der oberen 27 und unteren Gehäuseglocke 28 verschraubt sein. Diese Schraubverbindung kann auch beispielsweise durch eine Klemmverbindung realisiert sein, indem die Lagergehäuse der Lager 30 zwischen der oberen 27 und der unteren Gehäuseglocke 28 eingespannt sind.

Figur 3b zeigt eine vereinfachte Ausführung gemäß der Ausführung der Figur 3a, indem die untere Gehäuseglocke 28 entfallen ist. Hierbei handelt es sich um eine Ausführung, die sich von der Ausführung gemäß Figur 3 bzw. Figur 3a nur durch eine geringere Steifigkeit und damit durch eine geringere Stabilität ausweist, die jedoch in der Praxis je nach Einsatzverhältnissen hinreichend sein kann und somit eine preiswertere Variante der in der Fig. 3a dargestellten Ausführung darstellt.

Figur 3c zeigt die Ausführung eines Kreisels gemäß Figur 3b, jedoch mit einer weiteren Vereinfachung nämlich die eines nach unten offenen inneren Gehäuse 8, welches allgemein bekannt ist unter dem Begriff der offenen Kurvenbahn.

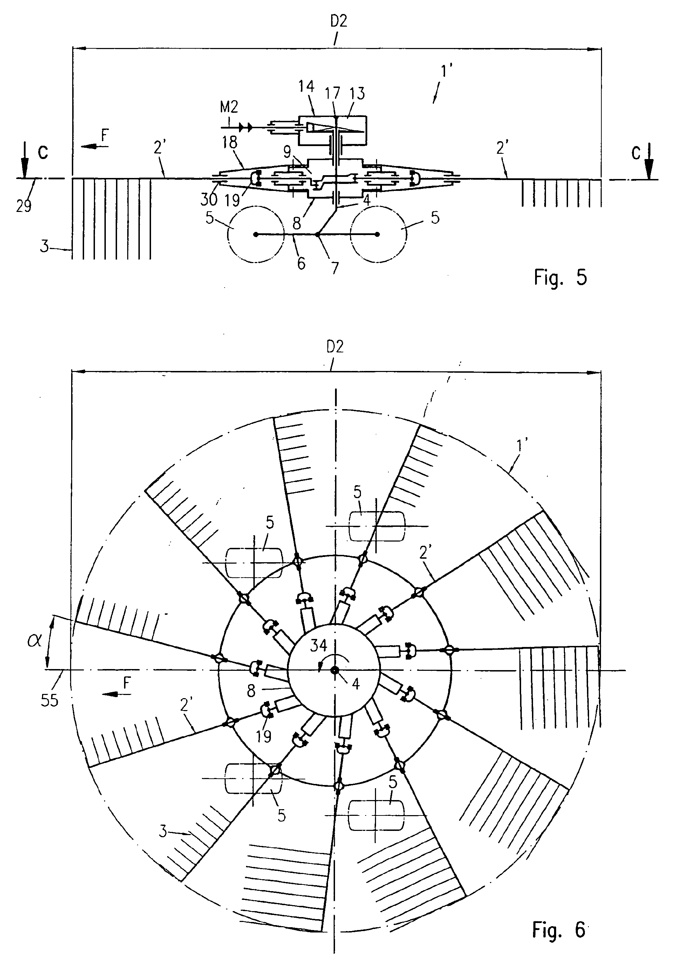

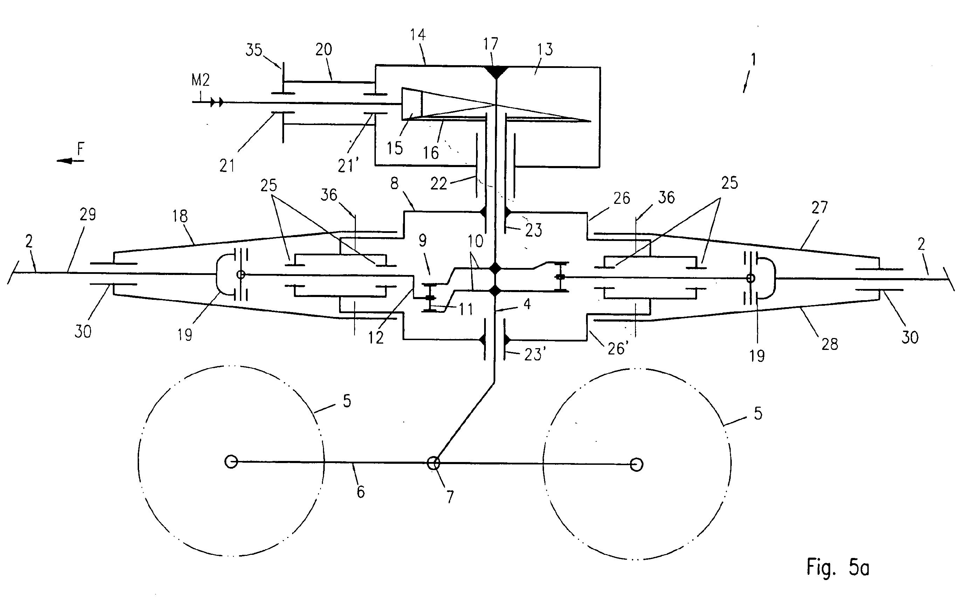

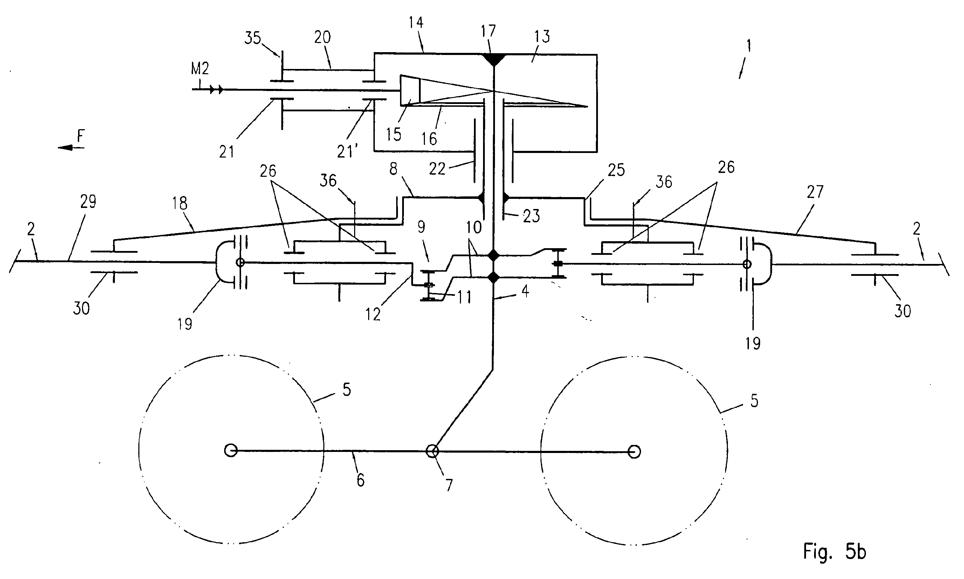

In den Figuren Fig. 5 und Fig. 6 sind analog Figur 1 und 2 prinzipiell die gleichen Schwadkreisel 1' mit dem Außendurchmesser D2 dargestellt. In einer weiteren Ausgestaltung der Erfindung sind die Zinkenarme 2' in ihrer Längserstreckung jedoch mittels einer Ausgleichskupplung 19 unterbrochen, wobei diese Unterbrechung antriebstechnisch durch diese Ausgleichskupplung 19 überbrückt ist. Dieses hat den Vorteil, das eventuelle Fluchtungsfehler zwischen den inneren Lagern 25 und den äußeren Stützlagern 30 problemlos ausgeglichen werden können.

In Fig. 6 ist der Schwadkreisel gemäß Fig. 5 in einem Horizontalschnitt gemäß Schnitt C-C dargestellt. Der Schnittverlauf ist dabei identisch mit der Rotationsebene 29 der Zinkenarme. In Fig. 5a ist wiederum ein vergrößerter Ausschnitt aus Fig.5 dargestellt.

Die räumliche Positionierung der Ausgleichskupplung 19 wird somit ermöglicht durch das Vorhandensein eines Zwischenraums 57 , welcher gebildet wird durch die Beabstandung eines inneren Lagers 25 gegenüber seinem benachbarten äußeren Stützlager 30.

Fig.5b zeigt wiederum eine vereinfachte Variantenkonstruktion gemäß der Ausführung in Fig. 5a, d.h. ohne die unterer Gehäuseglocke 28 mit wiederum nach unten offenem inneren Gehäuse 8.

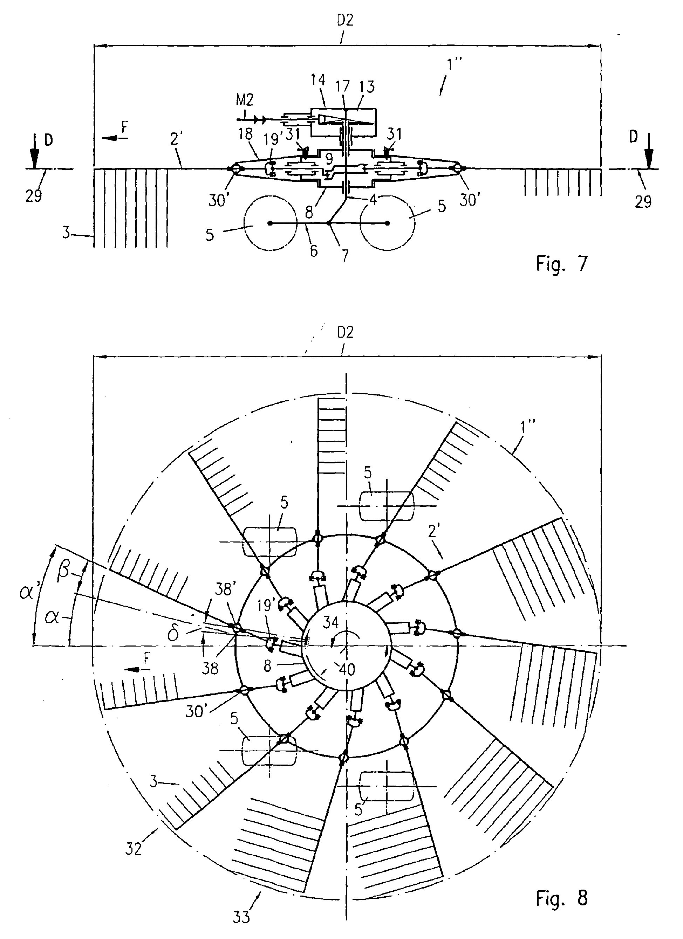

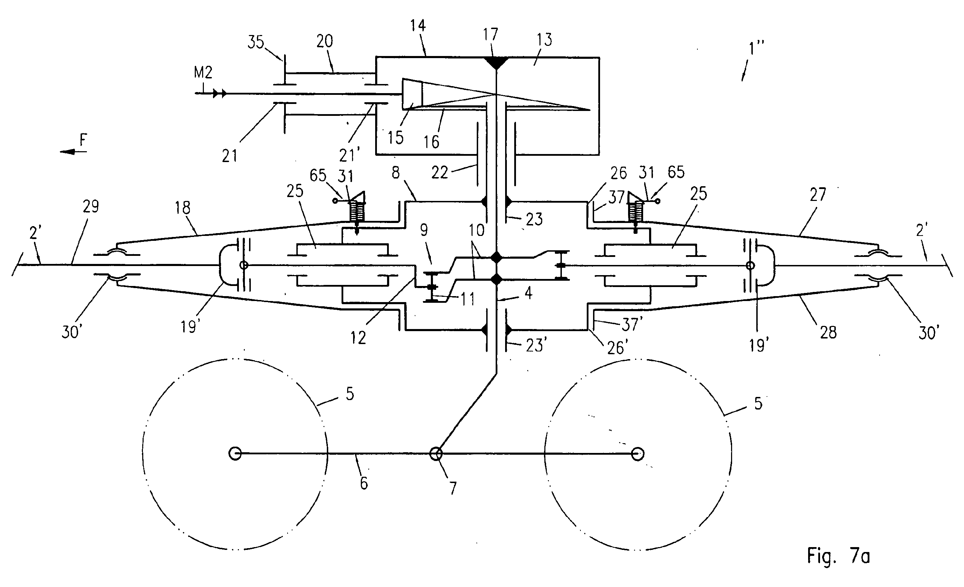

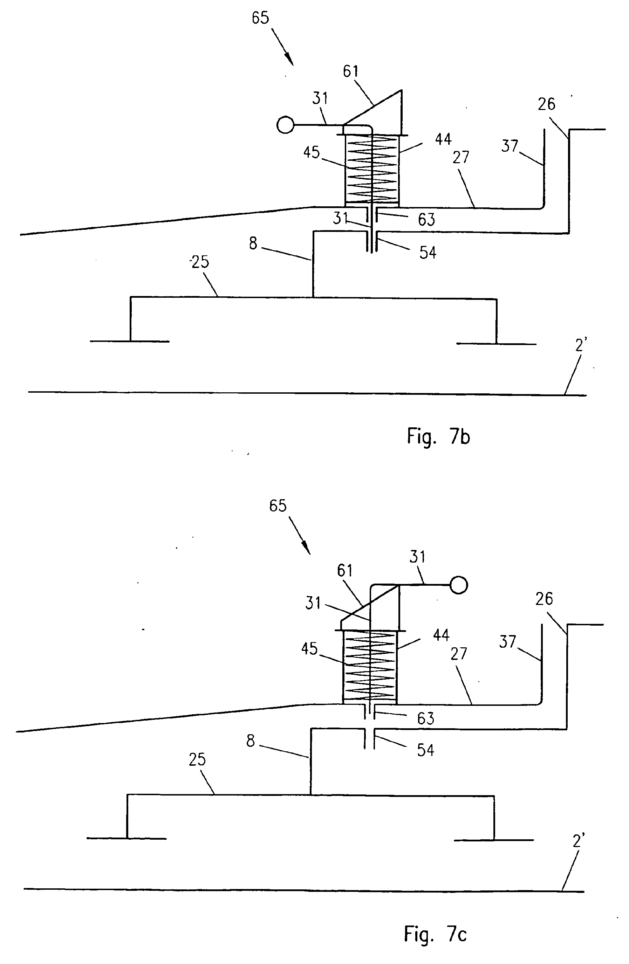

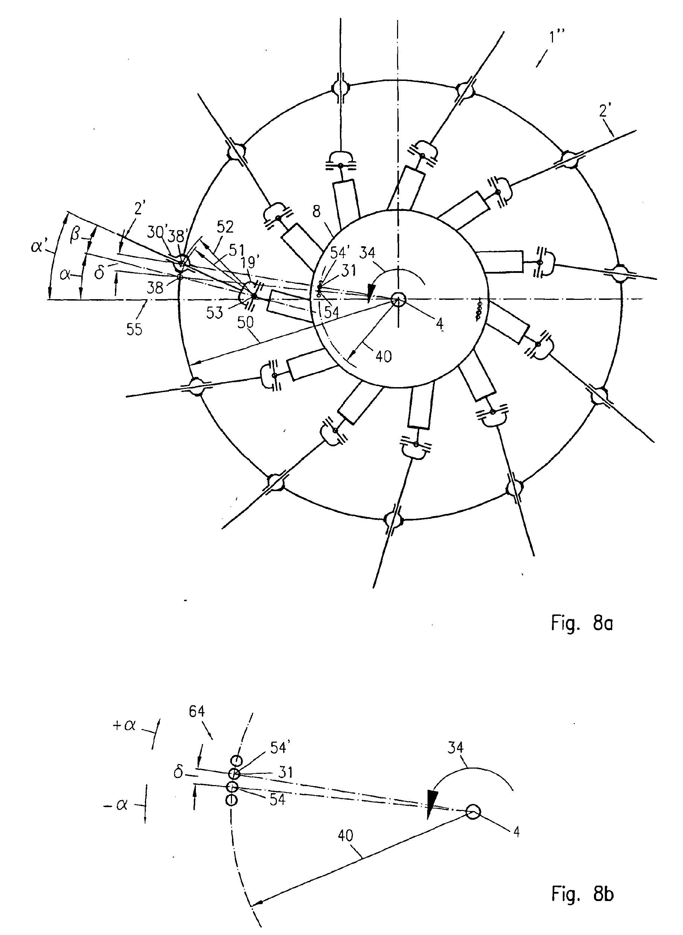

In Figur 7 und 8 ist der Schwadkreisel 1" analog der Fig. 5 und Fig. 6 dargestellt, wobei jedoch die Zinkenarme 2' eine zusätzliche Verschwenkung in der Rotationsebene um den Beugewinkel β gegenüber dem tangentialen Anstellwinkel α erfahren haben, so dass sich nunmehr der neue tangentiale Anstellwinkel α' eingestellt hat. In Fig. 8a ist diese Situation in einem vergrößerten Ausschnitt gemäß Fig. 8 dargestellt

Diese Veränderung des Anstellwinkels α kann dadurch ermöglicht werden, indem die Ausgleichskupplung 19 beispielsweise als Kreuzgelenk 19' ausgeführt ist.

In der dargestellten Drehwinkellage des Schwadkreisels 1" ist die dargestellte Drehwinkellage des inneren Gehäuses 8 gegenüber den Darstellungen der Schwadkreisels 1 bzw. 1' in den Fig. 2, Fig. 4 und Fig. 6 vereinbarungsgemäß unverändert, so das sich in dieser Betrachtungsweise der Ausgangspunkt 38 des äußeren Stützlagers 18 nunmehr auf dem Radius 50 in die neue Lage des Punktes 38' des äußeren Stützlagers 18 verschoben hat. Diese ist nur dann möglich, wenn das äußere Gehäuse 18 eine Verdrehung um die Kreiselachse 4 mit dem Verdrehwinkel δ erfahren hat. Dadurch verschiebt sich der Punkt 38 als Mittelpunkt des äußeren Stützlagers auf dem Radius 50 nunmehr in die Lage des Punktes 38'.

Bedingt durch die Lageveränderung des Punktes 38 in die Lage des Punktes 38' verändert sich aber auch der Ursprungsabstand 51, gemessen vom Schwenkmittelpunkt 53 des Ausgleichskupplung 19 bzw. des Kreuzgelenks 19', in den Abstand 52.

Diese Abstandsveränderung als Differenz der Abstände 51,52 entspricht einer relativen axialen Verrückung des äußeren Stützlager 30' längs eines Zinkenarms 2'. Dazu ist es erforderlich, dass das äußere Stützlager 30' nunmehr gleichzeitig als Radial- und Axiallager mit relativer Längsverschiebbarkeit eines Stützlagers (30,30') ausgebildet ist.

Damit eine derartige Verstellung des Anstellwinkels α,α' durchgeführt werden kann, ist es erforderlich, das äußere Gehäuse 18 um den Zentrieransatz 26, 26' des inneren Gehäuses 8 verdrehbar aber auch feststellbar zu lagern. Dazu können beispielsweise die obere Gehäuseglocke 27 bzw. unter Gehäuseglocke 28 mit einem Bund ausgestattet sein, der sich um den jeweiligen Zentrieransatz 26,26' drehbar und zentriert um die Kreiselachse 4 abstützt.

Ein Verriegelung kann beispielsweise durch eine Fesstelleinrichtung 65 durch einen federbelasteten Schnappriegelbolzen 31 erfolgen.

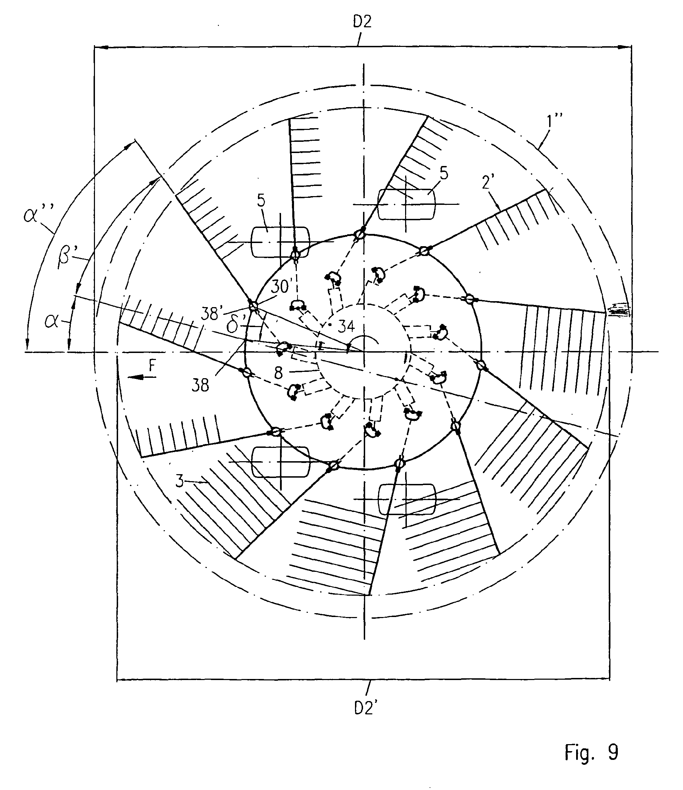

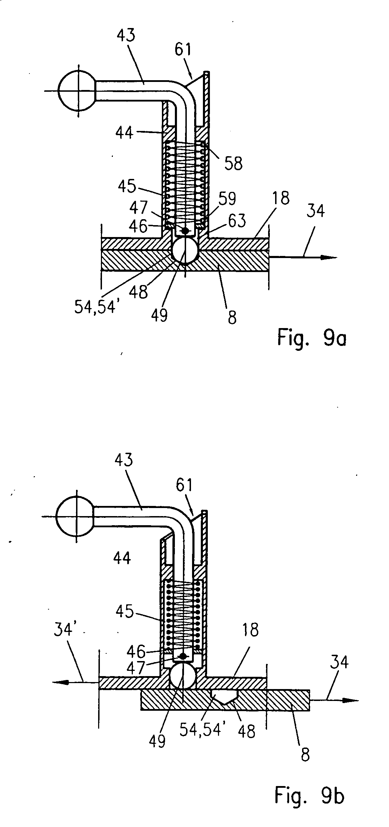

Die Fig. 7b und Fig. 7c zeigen ein prinzipielles Ausführungsbeispiel einer derartigen Fesstelleinrichtung 65, wobei Fig. 7b die verriegelte und Fig. 7c die entriegelte Lage des Schnappriegelbolzen 31 darstellt. Weitere konstruktive Einzelheiten können auch den Fig. 8a und 9b entnommen werden.

Demnach wird in bekannter Weise der abgewinkelte federbelastete Schnappriegelbolzen 31 in einem Führungsgehäuse 44 schwenkbar um ca. 180 Grad und gleichzeitig axial verschiebbar von einer Druckfeder 45 in axialer Richtung vorgespannt und geführt. Die vorgespannte Druckfeder 45 stützt sich dabei zum einen an der oberen Anlagefläche 58 des Führungsgehäuse 44 und zum andern an der unteren Anlagefläche 59, gebildet durch eine Unterlegscheibe 46, die unterhalb der Unterlegscheibe 46 durch einen Spannstift 47, welcher den quergebohrten Schnappriegelbolzen 31 durchdringt, ab. Durch eine Drehung des Schnappriegelbolzen 31 gleitet der abgewinkelte Teil des Schnappriegelbolzen 31 über eine Schiefe Ebene 61 hinweg, welches gleichzeitig eine axiale Verschiebung des Schnappriegelbolzen 31 bewirkt.

Das Führungsgehäuse 44 ist beispielsweise mit der oberen Gehäuseglocke 27 des äußeren Gehäuses 18 verschweißt und der Schnappriegelbolzen 31 durchdringt die Wand der Gehäuseglocke 27 in der Bohrung 63 um dann, je nach Stellung in Position wie in Fig. 7b dargestellt, in die Positionsbohrung 54 des inneren Gehäuses 8 einzugreifen, oder wie in der Stellung wie in Fig. 7b dargestellt, diese Positionsbohrung freizugeben.

In Fig. 8b ist eine vergrößerter Ausschnitt aus der Fig. 8a dargestellt. Dargestellt ist ein Lochbildmuster 64 in dem inneren Gehäuse 8 auf dem Radius 40 liegend, in dem der Schnappriegelbolzen 31 einrasten kann. Dabei gibt das Bogenmaß zwischen den 54 und 54' den Verdrehwinkel δ innerhalb eines Stufensprungs des Lochbildmusters 64 an. Die Richtungspfeile +α bzw. -α geben dabei die Richtung vor, in der der tangentiale Anstellwinkel α der Zinkenarme 2,2' eines Schwadkreisels 1,1',1" verändert werden kann.

Somit kann ein derartiger Verstellmechanismus realisiert werden beispielsweise in Stufensprüngen mit dem Verdrehwinkel δ gemäß Fig. 8a bzw. Fig. 8c, so dass der Schnappriegelbolzen 31 wahlweise in verschiedene Positionsbohrungen, beispielsweise 54 und 54' einrasten kann.

In einer weiteren Ausgestaltung der Erfindung kann der Verstellmechanismus zur Verstellung des Anstellwinkels α, wie unter Fig. 8 beschrieben, in Verbindung mit einer Anfahrsicherung für Schwadkreisel 1', 1" erweitert werden.

Eine derartige Anfahrsicherung insbesondere zum Schutz der Zinkenarme 2,2' und weiterer Bauelemente der Kurvenbahnsteuerung 9 vor Bruch und plastischen Verformungen aber auch zum Schutz vor Zahnbrüchen innerhalb des Kegelradgetriebes 13 ist in den Fig. 9, Fig. 9a und Fig. 9b dargestellt.

In der Darstellung in Fig.9 ist eine Situation unterstellt, dass während des Betriebszustandes eine Kollision zwischen den äußeren Enden der Zinkenarme 2' eines Schwadkreisels 1" und einem Hindernis, beispielsweise das eines Zaunpfahls, stattgefunden hat. Aufgrund der nachfolgend beschriebenen Überlastsicherung war es den Zinkenarmen möglich, tangential entgegen der Umlaufrichtung 34 auszuweichen, so das sich die Zinkenarme 2' um den Beugewinkel β' verschwenken konnten und sich somit der tangentiale Anstellwinkel α" einstellen konnte. Gleichzeitig verringerte sich der äußere Kreiseldurchmesser D2 auf den nunmehr reduzierten äußeren Kreiseldurchmesser D2'. Dazu ist es erforderlich, dass die Arretierung zur Feststellung des äußeren Gehäuses 18 unter einer definierten Überlast überwunden wird, so das nunmehr das äußeren Gehäuse 18 eine relative Verdrehung gegenüber dem inneren Gehäuse 8 in Folge der Überlast um den Verdrehwinkel δ' ausführen kann. Dieses setzt prinzipiell das Vorhandensein einer Überlastsicherung, beispielsweise in Form einer Abschersicherung oder in Form einer ausrastbaren Sperrkörperkupplung voraus.

Ein Ausführungsbeispiel einer derartigern Überlastsicherung, wie sie zur Funktion der zulässigen relativen Verdrehung um einen Verdrehwinkel δ' gemäß der Beschreibung unter Fig. 9 erforderlich ist, ist unter Fig. 9a und Fig. 9b dargestellt.

Der Schnappriegelbolzen 31, wie in den Fig. 7b und Fig. 7c beschrieben, wird in dem Ausführungsbeispiel Fig.9 in seiner Ausgestaltung derart modifiziert, dass seine Funktion zwar prinzipiell erhalten bleibt aber die eigentliche Verriegelungsfunktion von einer federbelasteten Stahlkugel 49 als Speerkörper übernommen wird. Diese Stahlkugel 49 wird analog der Beschreibung unter Fig. 7 und Fig. 8 von der Druckfeder 45 nunmehr von dem Federbolzen 43 in eine Kugelpfanne 48, die Bestandteil des inneren Gehäuses 8 ist, als Sperrkörper hineingedrückt. Andererseits ragt die Stahlkugel 49 als Sperrkörper auch in die Gehäusebohrung 63 des äußeren Gehäuses 18 hinein und verhindert dadurch im Normalbetrieb eine relative Verdrehung zwischen innerem 8 und äußerem Gehäuse 18, welches zu einer stabilen und dauerhaften Ausrichtung hinsichtlich des eingestellten Anstellwinkels α,α' im Betriebszustand des Kreiselschwaders führt.

Erst im Augenblick einer Kollision eines Zinkenarmen mit einem Hindernis entsteht unter Einfluss massiver Krafteinwirkung eine Drehmomentspitze, die als Umfangskraft auf die Stahlkugel einwirkt. Wird dabei ein voreingestellter Schwellenwert überschritten, der durch die der vorgespannten Druckfeder 45 vorgegeben ist, so kann sich die Stahlkugel 49 entgegen der Federkraft der vorgespannten Druckfeder 45 anheben und aus der Kugelpfanne 48 austreten.

In dem Augenblick verliert die Stahlkugel 49 ihrer Funktion als Sperrkörper, so dass die Zinkenarme einschließlich des äußeren Gehäuses18 entgegen der Umlaufrichtung 34 und damit relativ zu dieser nunmehr in Umlaufrichtung 34' um die Kreiselachse 4 verschwenken und somit dem Hindernis ausweichen können.

Dabei reduziert sich zwangsläufig der äußere Kreiseldurchmesser D2 des Schwadkreisels. 1" auf einen Kreiseldurchmesser D2', so dass nunmehr die Möglichkeit existiert, an dem sich in den Weg stellenden Hindernis ohne größere Folgeschäden, wie Verformungen oder Brüchen an Zinkenarmen 2,2', Kurvenbahnsteuerungen 9 oder Kegelradgetrieben13 vorbeifahren zu können

Andererseits kann der gleiche Mechanismus, wie in Fig. 9a und Fig. 9b dargestellt auch als Verstellmechanismus zur Verstellung des Anstellwinkels α, α' genutzt werden, indem zu diesem Zweck der Federbolzen 43 entlang der schiefen Ebene 61 verschwenkt wird, wobei der Federbolzen 43 eine axiale Verrückung erfährt und somit die Stahlkugel 49 während der relativen Verdrehung zwischen äußerem 18 und innerem Gehäuse 8 frei von der Federvorspannung der Druckfeder 45 ist.

Dadurch kann sich die Stahlkugel 49 ohne größeren Widerstand aus der Kugelpfanne 48 anheben und während der Drehung des äußeren Gehäuses 18 in die nächste benachbarte Positionsbohrung 54,54', welche ebenfalls als Kugelpfanne 48 ausgebildet ist einfallen, um dort bei in die vorgespannte Lage zurück geschwenktem Federbolzen 43 ihre Funktion als Sperrkörper wieder aufnehmen zu können.

Eine derartige Ausgestaltung von Rechkreiseln ermöglicht im Kollisionsfall Verkleinerungen des größten Kreiseldurchmessers D1 um weit mehr als 10 % des Ausgangdurchmessers, welches von erhebliches Vorteil beim Einsatz von Großschwadern darstellt, da Hindernisabstände auf große Entfernungen weitaus schwieriger einzuschätzen sind, als dieses bei kleineren Schwadern vergleichsweise der Fall ist.

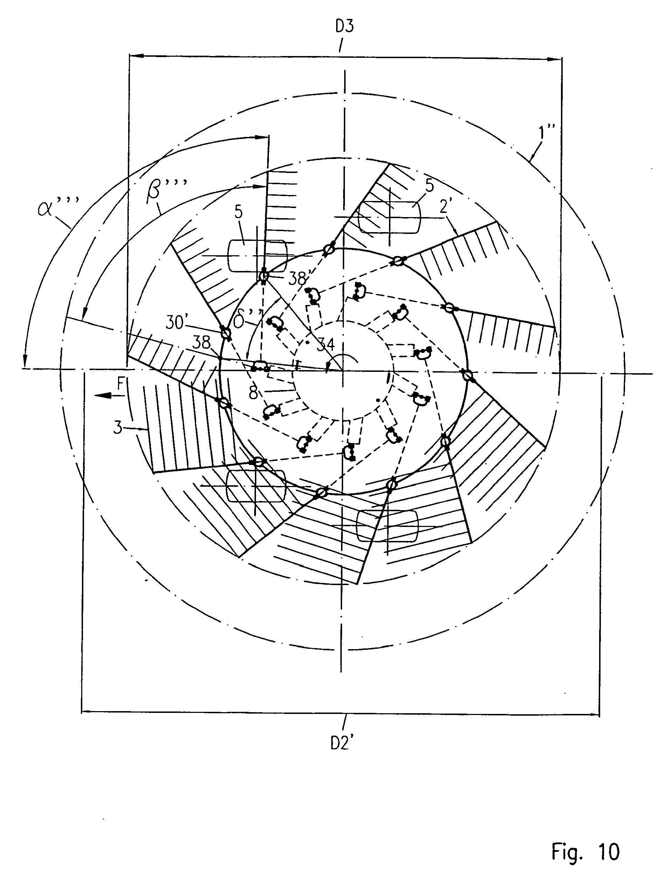

Fig. 10 zeigt eine weitere vorteilhafte Wirkung der Erfindung. Durch die relative Drehung des äußeren Gehäuses 18 gegenüber dem inneren Gehäuse 8 ist es weiterhin möglich, die Zinkenarme tangential soweit anzustellen, das sich ein besonders kleiner Kreiseldurchmesser D3 einstellt. Dieses eignet sich in besonderer Weise zur Minderung der Transportabmessungen eines Kreiselschwaders für den Straßenverkehr und kann auch beispielsweise das Abnehmen der Zinkenarme für Transportzwecke ersparen. Gerade diese Umbauarbeiten nehmen bei Mehrkreiselschwadern einen erheblichen Zeitaufwand in Anspruch, so dass auch dieses erfinderische Merkmal zu einer erheblichen Verbesserung des wirtschaftlichen Einsatzes eines Kreiselschwaders beitragen kann.

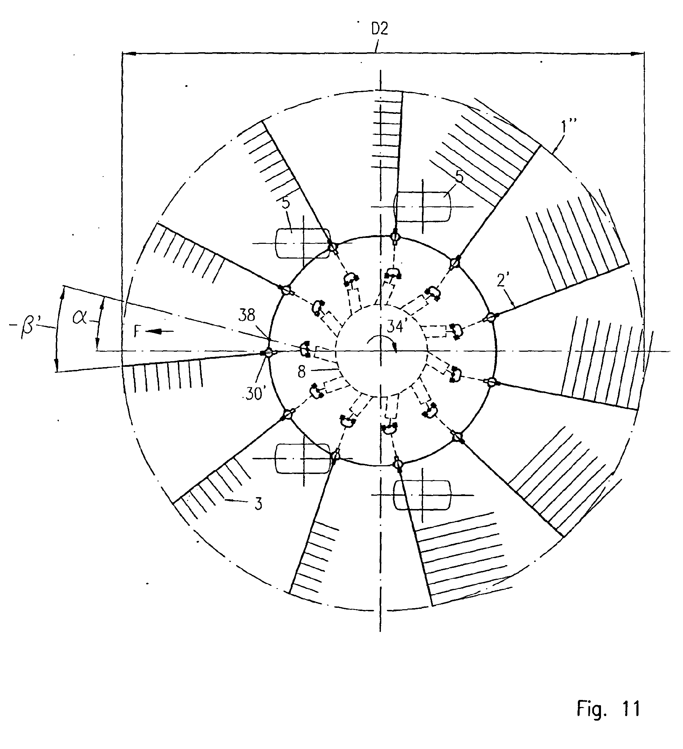

In Fig. 11 ist ein weiterer Vorteil nach der Erfindung dargestellt. Wird das äußere Gehäuse 18 gemäß Fig. 8b um einen entsprechend negativen Winkel -δ gegenüber dem inneren Gehäuse 8 verdreht, so kann der tangentiale Anstellwinkel α identisch zu Null verschwinden bzw. einen Wert mit umgekehrtem Vorzeichen annehmen. Dieses bedeutet sowohl im praktischen wie auch im mathematischen Sinne einen Nulldurchgang. Infolge dessen erreicht auch der Beugungswinkel B einen Nulldurchgang und kann dadurch negative Beugungswinkel -β annehmen.

Insbesondere in Verbindung mit Mehrkreiselschwadern, z.B. an 4-Kreiselschwadern mit mittiger Schwadablage zur Bildung eines Großschwads, kann dieser Effekt in Verbindung mit einem Umschaltgetriebe zur Drehrichtungsumkehr eines Schwadkreisel in besonderer Weise zur Bildung von kleinen - sogenannten - Nachtschwaden genutzt werden.

Dieses macht dann allerdings eine Drehrichtungsumkehr in die Umlaufrichtung 34' erforderlich. Gleichermaßen müssen dann auch die Zinkenarme ausgetauscht, d.h. der Drehrichtung angepasst werden. Dieses wird beispielsweise dadurch ermöglicht, indem die Zinkenarme mit der Ausgleichskupplung 19,19' durch eine Kupplungseinrichtung, -beispielsweise mittels einer Steckkupplung 42, verbunden sind.

## Patentansprüche

1. Kreiselschwader zum Rechen und Schwaden von stängeligem Grünfuttererntegut mit mindestens einem um eine vertikale Kreiselachse (4) umlaufend angetriebenen mittels Tast-und Stützrädern (5) am Boden abgestützten Schwadkreisel (1), wobei der Schwadkreisel (1) eine Kurvenbahnsteuerung (9) für gesteuerte an Zinkenarmen (2) befestigte Rechzinken (3) aufweist, wobei die Zinkenarme (2) endseitig der Kreiselachse (4) zugewandt mit Steuerhebeln (12) bestückte Laufrollen (11) aufweisen, die mit der Kurvenbahnsteuerung (9) in Eingriff stehen, und die Zinkenarme (2) in Lagern (25) als Teil eines um die Kreiselachse (4) umlaufend angetriebenen inneren Gehäuses (8) gelagert sind, und wobei das innere Gehäuse (8) zur Aufnahme der Kurvenbahnsteuerung (9) von einem zweiten äußeren mitumlaufenden Gehäuse (18) umgeben ist, das äußere Lager (30,30') zur zusätzlichen Abstützung der Zinkenarme (1,1',1") aufweist, **dadurch gekennzeichnet, dass** das innere Gehäuse (8) zur Erzeugung aller Bewegungsvorgänge der Rechzinken auf deren Umlaufbahn um die Kreiselachse eine vollständige und funktionsfähige in sich abgeschlossene Basiseinheit darstellt, welche für sich allein genommen bereits die Zinkenarme (2) lagern und steuern kann, und damit eine modulare Plattform für Typenreihen von Kreiselschwadern mit unterschiedlich großen Schwadkreiseldurchmessern (D1,D2) darstellt.

2. Kreiselschwader nach Anspruch 1 oder 2, **dadurch gekennzeichnet, dass** das erste innere Gehäuse (8) Teil einer vollständigen und funktionsfähigen Basiseinheit, bestehend aus innerem Gehäuse (8), Kurvenbahnsteuerung (9) mit den Steuerelementen Kurvenbahn (10), Steuerhebeln (12), Laufrollen (11) und Lagern (25), darstellt.

3. Kreiselschwader nach Anspruch 3, **dadurch gekennzeichnet, dass** das inneren Gehäuse (8) vollständig vom äußeren Gehäuse (18) umgeben ist.

4. Kreiselschwader nach Anspruch 3, **dadurch gekennzeichnet, dass** das inneren Gehäuse (8) teilweise vom äußeren Gehäuse (18) umgeben ist

5. Kreiselschwader nach Anspruch 1 in Verbindung mit einem oder mehreren der vorhergehenden Ansprüche, **dadurch gekennzeichnet, dass** das äußeres Gehäuse (18) an dem inneren Gehäuse (8) mittels einer Schraubverbindung (36) mit diesem (8) abgestützt und verbunden ist.

6. Kreiselschwader nach Anspruch 1 in Verbindung mit einem oder mehreren der vorhergehenden Ansprüche, **dadurch gekennzeichnet, dass** das äußeres Gehäuse (18) an dem inneren Gehäuse (8) mittels einer Schweißverbindung mit diesem (8) abgestützt und verbunden ist.

7. Kreiselschwader nach Anspruch 1 in Verbindung mit einem oder mehreren der vorhergehenden Ansprüche, **dadurch gekennzeichnet, dass** die Steuerhebel (12) und die Zinkenarme (2 oder 2') durch eine Ausgleichskupplung (19), die zwischen den Lagern (25) und den Lagern (30,30') angeordnet sind, untereinander verbunden sind.

8. Kreiselschwader nach Anspruch 1 in Verbindung mit einem oder mehreren der vorhergehenden Ansprüche, **dadurch gekennzeichnet, dass** die Ausgleichskupplung (19) so ausgebildet ist, dass diese Fluchtungsfehler zwischen den Lagern (25) und den Lagern (30,30') ausgleichen kann.

9. Kreiselschwader nach Anspruch 1 in Verbindung mit einem oder mehreren der vorhergehenden Ansprüche, **dadurch gekennzeichnet, dass** die Ausgleichskupplung (19) als Kreuzgelenk (19') ausgebildet ist.

10. Kreiselschwader nach Anspruch 1 in Verbindung mit einem oder mehreren der vorhergehenden Ansprüche, **dadurch gekennzeichnet, dass** die Zinkenarme (2,2') so ausgebildet, gelagert und abgestützt sind, dass diese gegenüber der Drehachse der Lager (25) der Steuerhebel (12) einem Beugewinkel (β,β',β") ausgesetzt sein können.

11. Kreiselschwader nach Anspruch 1 in Verbindung mit einem oder mehreren der vorhergehenden Ansprüche, **dadurch gekennzeichnet, dass** das äußere Gehäuse (18) und dass innere Gehäuse (8) um die Kreiselachse (4) gelagert, relativ um einen Verdrehwinkel (δ,δ',δ") zueinander verdrehbar sind.

12. Kreiselschwader nach Anspruch 1 in Verbindung mit einem oder mehreren der vorhergehenden Ansprüche, **dadurch gekennzeichnet, dass** das äußere Gehäuse (18) relativ zum inneren Gehäuse (8) verdrehbare, durch eine Feststelleinrichtung (65) in seiner Lage fixiert werden kann.

13. Kreiselschwader nach Anspruch 1 in Verbindung mit einem oder mehreren der vorhergehenden Ansprüche, **dadurch gekennzeichnet, dass** das die Feststelleinrichtung (65) einen federbelasteten Schnappriegel aufweist.

14. Kreiselschwader nach Anspruch 1 in Verbindung mit einem oder mehreren der vorhergehenden Ansprüche, **dadurch gekennzeichnet, dass** in Verbindung mit der relativen Verdrehung um einen Verdrehwinkel (δ,δ') des äußere Gehäuse (18) gegenüber dem inneren Gehäuse (8) ein Verstellmechanismus insgesamt gebildet werden kann, der eine Veränderbarkeit des tangentialen Eingriffswinkels (α,α') ermöglicht.

15. Kreiselschwader nach Anspruch 1 in Verbindung mit einem oder mehreren der vorhergehenden Ansprüche, **dadurch gekennzeichnet, dass** der Verdrehwinkel (δ) in Stufensprüngen durch eine Feststelleinrichtung (65) veränderbar ist.

16. Kreiselschwader nach Anspruch 1 in Verbindung mit einem oder mehreren der vorhergehenden Ansprüche, **dadurch gekennzeichnet, dass** das äußere Gehäuse (18) und dass innere Gehäuse (8) relativ zueinander verdrehbar um einen Verdrehwinkel (δ,δ',δ") um die Kreiselachse (4) eine Anfahrsicherung als Überlastsicherung beinhaltet.

17. Kreiselschwader nach Anspruch 1 in Verbindung mit einem oder mehreren der vorhergehenden Ansprüche, **dadurch gekennzeichnet, dass** das äußere Gehäuse (18) aus geprägten Gehäuseglocken (27,28) besteht.

18. Kreiselschwader nach Anspruch 1 in Verbindung mit einem oder mehreren der vorhergehenden Ansprüche, **dadurch gekennzeichnet, dass** das äußere Gehäuse (18) aus einer geprägten oberen Gehäuseglocken (27) besteht.

19. Kreiselschwader nach Anspruch 1 in Verbindung mit einem oder mehreren der vorhergehenden Ansprüche, **dadurch gekennzeichnet, dass** ein äußere Stützlager (30,30') aus einem richtungsveränderbaren Schwenklager besteht.

20. Kreiselschwader nach Anspruch 1 in Verbindung mit einem oder mehreren der vorhergehenden Ansprüche, **dadurch gekennzeichnet, dass** ein äußere Stützlager (30,30') als richtungsveränderbares Schwenklager beispielsweise aus einem Kugelgelenklager besteht.

21. Kreiselschwader nach Anspruch 1 in Verbindung mit einem oder mehreren der vorhergehenden Ansprüche, **dadurch gekennzeichnet, dass** ein äußere Stützlager (30,30') als Axial- und Radiallager mit relativer Längsverschiebbarkeit eines Stützlagers (30,30') gegenüber den Zinkenarmen (2,2') ausgebildet ist

22. Kreiselschwader nach Anspruch 1 in Verbindung mit einem oder mehreren der vorhergehenden Ansprüche, **dadurch gekennzeichnet, dass** durch die Veränderung des Beugewinkels (β) mit negativem Beugewinkel (-β) eine Veränderung der Umlaufrichtung (34,34') eines Schwadkreisels (1,1',1") möglich ist.

23. Kreiselschwader nach Anspruch 1 in Verbindung mit einem oder mehreren der vorhergehenden Ansprüche, **dadurch gekennzeichnet, dass** die Zinkenarme (2,2') mittels einer Kupplungseinrichtung, beispielsweise ausgeführt als Steckkupplung 42, an - oder abgebaut werden können.

24. Kreiselschwader nach Anspruch 1 in Verbindung mit einem oder mehreren der vorhergehenden Ansprüche, **dadurch gekennzeichnet, dass** die Zinkenarme (2,2') von links- oder rechtsdrehenden Schwadkreiseln durch eine Kupplungseinrichtung, beispielsweise ausgeführt als Steckkupplung 42, untereinander austauschbar sind.

25. Kreiselschwader nach Anspruch 1 in Verbindung mit einem oder mehreren der vorhergehenden Ansprüche, **dadurch gekennzeichnet, dass** die Zinkenarme (2,2') von links- oder rechtsdrehenden Schwadkreiseln untereinander austauschbar sind.

26. Kreiselschwader nach Anspruch 1 in Verbindung mit einem oder mehreren der vorhergehenden Ansprüche, **dadurch gekennzeichnet, dass** durch die Veränderung des Beugewinkels (β) der Kreiseldurchmesser (D2,D3) gegenüber den maximalen Kreiseldurchmessers (D1) um mindestens 10 % verkleinerbar ist.

## Claims

1. A rotary windrower for raking and windrowing stalked green fodder crop material comprising at least one windrowing rotor (1) which is driven in rotation about a vertical rotor axis (4) and which is supported on the ground by means of feeler and support wheels (5), wherein the windrowing rotor (1) has a cam track control (9) for controlled rake tines (3) fixed to tine arms (2), wherein the tine arms (2) have at the end facing towards the rotor axis (4) travel rollers (11) which are fitted with control levers (12) and which are in engagement with the cam track control (9), and the tine arms (2) are supported in mountings (25) as part of an inner housing (8) which is driven in rotation about the rotor axis (4), and wherein the inner housing (8) for accommodating the cam track control (9) is surrounded by a second outer housing (18) which rotates therewith and which has outer mountings (30, 30') for additionally supporting the tine arms (1, 1', 1 "), **characterised in that** for producing all movement procedures of the rake tines on the circulatory path around the rotor axis the inner housing (8) represents a complete, functional, self-contained base unit which considered in itself can already support and control the tine arms (2) and thus represents a modular platform for type series of rotary windrowers involving windrowing rotor diameters (D1, D2) of different sizes.

2. A rotary windrower according to claim 1 **characterised in that** the first inner housing (8) is part of a complete and functional base unit comprising the inner housing (8), the cam track control (9) with the control elements cam track (10), control levers (12), travel rollers (11) and mountings (25).

3. A rotary windrower according to claim 2 **characterised in that** the inner housing (8) is completely enclosed by the outer housing (18).

4. A rotary windrower according to claim 2 **characterised in that** the inner housing (8) is partially enclosed by the outer housing (18).

5. A rotary windrower according to claim 1 in conjunction with one or more of the preceding claims **characterised in that** the outer housing (18) is supported at and connected to the inner housing (8) by means of a screw connection (36).

6. A rotary windrower according to claim 1 in conjunction with one or more of the preceding claims **characterised in that** the outer housing (18) is supported at and connected to the inner housing (8) by means of a welded connection.

7. A rotary windrower according to claim 1 in conjunction with one or more of the preceding claims **characterised in that** the control levers (12) and the tine arms (2 or 2') are connected together by a compensating coupling (19) arranged between the mountings (25) and the mountings (30, 30').

8. A rotary windrower according to claim 1 in conjunction with one or more of the preceding claims **characterised in that** the compensating coupling (19) is of such a configuration that it can compensate for alignment errors between the mountings (25) and the mountings (30, 30').

9. A rotary windrower according to claim 1 in conjunction with one or more of the preceding claims **characterised in that** the compensating coupling (19) is in the form of a universal joint (19').

10. A rotary windrower according to claim 1 in conjunction with one or more of the preceding claims **characterised in that** the tine arms (2, 2') are so designed, supported and mounted that they can be exposed to a bending angle (β, β', β") with respect to the axis of rotation of the mountings (25) of the control levers (12).

11. A rotary windrower according to claim 1 in conjunction with one or more of the preceding claims **characterised in that** the outer housing (18) and the inner housing (8) are mounted rotatably with respect to each other about the rotor axis (4) relatively through a rotational angle (δ, δ', δ").

12. A rotary windrower according to claim 1 in conjunction with one or more of the preceding claims **characterised in that** the outer housing (18) can be fixed in its position rotatably relative to the inner housing (8) by a fixing device (65).

13. A rotary windrower according to claim 1 in conjunction with one or more of the preceding claims **characterised in that** the fixing device (65) has a spring-loaded snap bolt.

14. A rotary windrower according to claim 1 in conjunction with one or more of the preceding claims **characterised in that** in conjunction with the relative rotation through a rotational angle (δ, δ') of the outer housing (18) with respect to the inner housing (8) an adjusting mechanism can be overall formed which permits variability of the tangential engagement angle (α, α').

15. A rotary windrower according to claim 1 in conjunction with one or more of the preceding claims **characterised in that** the rotational angle (δ) is variable in step jumps by a fixing device (65).

16. A rotary windrower according to claim 1 in conjunction with one or more of the preceding claims **characterised in that** the outer housing (18) and the inner housing (8) include rotatably relative to each other through a rotational angle (δ, δ', δ") around the rotor axis (4) a start-up safeguard as an overload safeguard.

17. A rotary windrower according to claim 1 in conjunction with one or more of the preceding claims **characterised in that** the outer housing (18) comprises pressed housing bells (27, 28).

18. A rotary windrower according to claim 1 in conjunction with one or more of the preceding claims **characterised in that** the outer housing (18) comprises a pressed upper housing bell (27).

19. A rotary windrower according to claim 1 in conjunction with one or more of the preceding claims **characterised in that** an outer support mounting (30, 30') comprises a variable-direction pivot mounting.

20. A rotary windrower according to claim 1 in conjunction with one or more of the preceding claims **characterised in that** an outer support mounting (30, 30') as a variable-direction pivot mounting comprises for example a ball joint mounting.

21. A rotary windrower according to claim 1 in conjunction with one or more of the preceding claims **characterised in that** an outer support mounting (30, 30') is in the form of an axial and radial mounting with relative longitudinal displaceability of a support mounting (30, 30') with respect to the tine arms (2, 2').

22. A rotary windrower according to claim 1 in conjunction with one or more of the preceding claims **characterised in that** a variation in the rotational direction (34, 34') of a windrowing rotor (1, 1', 1") is possible by the variation in the bending angle (β) with a negative bending angle (-β).

23. A rotary windrower according to claim 1 in conjunction with one or more of the preceding claims **characterised in that** the tine arms (2, 2') can be fitted or removed by means of a coupling device, for example in the form of a plug coupling (42).

24. A rotary windrower according to claim 1 in conjunction with one or more of the preceding claims **characterised in that** the tine arms (2, 2') of windrowing rotors which rotate anticlockwise or clockwise are interchangeable with each other by a coupling device, for example in the form of a plug coupling (42).

25. A rotary windrower according to claim 1 in conjunction with one or more of the preceding claims **characterised in that** the tine arms (2, 2') of windrowing rotors which rotate anticlockwise or clockwise are interchangeable with each other.

26. A rotary windrower according to claim 1 in conjunction with one or more of the preceding claims **characterised in that** the rotor diameter (D2, D3) can be reduced by at least 10% with respect to the maximum rotor diameter (D1) by the variation in the bending angle (β).

## Revendications

1. Andaineur à rotor, destiné à râteler et andainer une récolte de fourrage vert à tiges, avec au moins un rotor d'andainage (1) qui est entraîné en rotation autour d'un axe de rotor vertical (4) et qui prend appui sur le sol par l'intermédiaire de roues de jauge et d'appui (5), le rotor d'andainage (1) étant doté d'une commande à came (9) pour des dents de râtelage (3) fixées sur des bras de râtelage (2), les bras de râtelage (2) possédant à l'une de leurs extrémités tournée vers l'axe de rotor (4) des galets de roulement (11) qui sont équipés de levier de commande (12) et qui coopèrent avec la commande à came (9), et les bras de râtelage (2) étant montés dans des paliers (25) faisant partie d'un carter intérieur (8) entraîné en rotation autour de l'axe de rotor (4), le carter intérieur (8) étant entouré, pour recevoir la commande à came (9), d'un second carter extérieur solidaire en rotation (18) qui possède des paliers extérieurs (30, 30') destinés à fournir un support supplémentaire aux bras de râtelage (1, 1', 1"), **caractérisé en ce que**, pour générer tous les processus de déplacement des dents de râtelage sur leur trajectoire de rotation autour de l'axe de rotor, le carter intérieur (8) constitue une unité de base complète, fonctionnelle et autonome qui, à elle seule, peut déjà supporter et commander les bras de râtelage (2) et représente ainsi une plate-forme modulaire pour des séries de modèles d'andaineurs rotatifs possédant ayant des diamètres de rotor d'andainage (D1, D2) de longueurs différentes.

2. Andaineur à rotor selon la revendication 1 ou 2, **caractérisé en ce que** le premier carter intérieur (8) est une partie d'une unité de base complète et fonctionnelle composée du carter intérieur (8), de la commande à came (9) dont les éléments de commande sont une came (10), des leviers de commande (12), des galets de roulement (11) et des paliers (25).

3. Andaineur à rotor selon la revendication 3, **caractérisé en ce que** le carter intérieur (8) est entièrement entouré par le carter extérieur (18).

4. Andaineur à rotor selon la revendication 3, **caractérisé en ce que** le carter intérieur (8) est partiellement entouré par le carter extérieur (18).

5. Andaineur à rotor selon la revendication 1 en liaison avec une ou plusieurs des revendications précédentes, **caractérisé en ce que** le carter extérieur (18) est relié et prend appui sur le carter intérieur (8) à l'aide d'une liaison vissée (36).

6. Andaineur à rotor selon la revendication 1 en liaison avec une ou plusieurs des revendications précédentes, **caractérisé en ce que** le carter extérieur (18) est relié et prend appui sur le carter intérieur (8) à l'aide d'une liaison soudée.

7. Andaineur à rotor selon la revendication 1 en liaison avec une ou plusieurs des revendications précédentes, **caractérisé en ce que** les leviers de commande (12) et les bras de râtelage (2 ou 2') sont reliés ensemble par un accouplement de compensation (19) qui est disposé entre les paliers (25) et les paliers (30, 30').

8. Andaineur à rotor selon la revendication 1 en liaison avec une ou plusieurs des revendications précédentes, **caractérisé en ce que** l'accouplement de compensation (19) est conformé de manière à pouvoir compenser les erreurs d'alignement entre les paliers (25) et les paliers (30, 30').

9. Andaineur à rotor selon la revendication 1 en liaison avec une ou plusieurs des revendications précédentes, **caractérisé en ce que** l'accouplement de compensation (19) est conformé en joint de cardan (19').

10. Andaineur à rotor selon la revendication 1 en liaison avec une ou plusieurs des revendications précédentes, **caractérisé en ce que** les bras de râtelage (2, 2') sont conformés, montés et soutenus de manière à être soumis à un angle de flexion (β, β', β'') par rapport à l'axe de rotation des paliers (25) des leviers de commande (12).

11. Andaineur à rotor selon la revendication 1 en liaison avec une ou plusieurs des revendications précédentes, **caractérisé en ce que** le carter extérieur (18) et le carter intérieur (8) peuvent pivoter l'un par rapport à l'autre, autour de l'axe de rotor (4), selon un angle de torsion (δ, δ', δ'').

12. Andaineur à rotor selon la revendication 1 en liaison avec une ou plusieurs des revendications précédentes, **caractérisé en ce que** le carter extérieur (18) peut pivoter par rapport au carter intérieur (8) et peut être immobilisé dans sa position par un dispositif d'immobilisation (65).

13. Andaineur à rotor selon la revendication 1 en liaison avec une ou plusieurs des revendications précédentes, **caractérisé en ce que** le dispositif d'immobilisation (65) possède un verrou encliquetable sollicité par ressort.

14. Andaineur à rotor selon la revendication 1 en liaison avec une ou plusieurs des revendications précédentes, **caractérisé en ce que** la rotation du carter extérieur (18) par rapport au carter intérieur (8) sur un angle de torsion (δ, δ') permet de réaliser un mécanisme de réglage apte à corriger l'angle d'attaque tangentiel (α, α').

15. Andaineur à rotor selon la revendication 1 en liaison avec une ou plusieurs des revendications précédentes, **caractérisé en ce que** l'angle de torsion (δ) peut être corrigé graduellement par l'intermédiaire d'un dispositif d'immobilisation (65).

16. Andaineur à rotor selon la revendication 1 en liaison avec une ou plusieurs des revendications précédentes, **caractérisé en ce que** le carter extérieur (18) et le carter intérieur (8) peuvent pivoter relativement l'un à l'autre selon un angle de torsion (δ, δ', δ'') autour de l'axe de rotor (4) et constituent ainsi un dispositif anti-collision servant de limiteur de charge.

17. Andaineur à rotor selon la revendication 1 en liaison avec une ou plusieurs des revendications précédentes, **caractérisé en ce que** le carter extérieur (18) est constitué de cloches de carter (27, 28) estampées.

18. Andaineur à rotor selon la revendication 1 en liaison avec une ou plusieurs des revendications précédentes, **caractérisé en ce que** le carter extérieur (18) est constitué d'une cloche de carter (27) supérieure estampée.

19. Andaineur à rotor selon la revendication 1 en liaison avec une ou plusieurs des revendications précédentes, **caractérisé en ce qu'**un palier d'appui extérieur (30, 30') est constitué d'un palier pivotant à orientation variable.

20. Andaineur à rotor selon la revendication 1 en liaison avec une ou plusieurs des revendications précédentes, **caractérisé en ce qu'**un palier d'appui extérieur (30, 30') est constitué d'un palier pivotant à orientation variable, par exemple d'un palier articulé à billes.

21. Andaineur à rotor selon la revendication 1 en liaison avec une ou plusieurs des revendications précédentes, **caractérisé en ce qu'**un palier d'appui extérieur (30, 30') est conformé en palier axial et radial, avec possibilité de déplacement longitudinal du palier d'appui (30, 30') par rapport aux bras de râtelage (2, 2').

22. Andaineur à rotor selon la revendication 1 en liaison avec une ou plusieurs des revendications précédentes, **caractérisé en ce que** la variation de l'angle de flexion (β) suivant une valeur négative (-β) permet de modifier la direction de rotation (34, 34') d'un rotor d'andainage (1, 1', 1'').

23. Andaineur à rotor selon la revendication 1 en liaison avec une ou plusieurs des revendications précédentes, **caractérisé en ce que** les bras de râtelage (2, 2') peuvent être montés ou démontés à l'aide d'un dispositif d'accouplement, conformé par exemple en accouplement enfichable (42).

24. Andaineur à rotor selon la revendication 1 en liaison avec une ou plusieurs des revendications précédentes, **caractérisé en ce que** les bras de râtelage (2, 2') de rotors d'andainage tournant vers la droite ou vers la gauche peuvent être remplacés entre eux l'aide d'un dispositif d'accouplement conformé par exemple en accouplement enfichable (42).

25. Andaineur à rotor selon la revendication 1 en liaison avec une ou plusieurs des revendications précédentes, **caractérisé en ce que** les bras de râtelage (2, 2') de râteaux rotatifs tournant vers la droite ou vers la gauche peuvent être remplacés entre eux.

26. Andaineur à rotor selon la revendication 1 en liaison avec une ou plusieurs des revendications précédentes, **caractérisé en ce que**, en modifiant l'angle de flexion (β), il est possible de réduire le diamètre du rotor d'andainage (D2, D3) d'au moins 10 % par rapport au diamètre maximal du rotor d'andainage (D1).
